# EUROPÄISCHE PATENTSCHRIFT

(11) **EP 2 983 852 B1**
(45) Veröffentlichungstag und Bekanntmachung des Hinweises auf die Patenterteilung: **22.09.2021**
(21) Anmeldenummer: 14712661.9
(22) Anmeldetag: 25.03.2014
(51) Int. Cl.: B23C 5/10

(54) **FRÄSWERKZEUG**
MILLING TOOL
OUTIL DE FRAISAGE

(30) Priorität: 09.04.2013 DE 102013206249; 26.02.2014 DE 202014002031 U
(43) Veröffentlichungstag der Anmeldung: 17.02.2016
(73) Patentinhaber: MAPAL Fabrik für Präzisionswerkzeuge Dr. Kress KG, 73431 Aalen (DE)
(72) Erfinder: KOCH, Achim, 89296 Osterberg (DE); HEINISCH, Heiko, 88451 Dettingen/Iller Ortsteil Buchau (DE)
(74) Vertreter: Kordel, Mattias
(86) Internationale Anmeldenummer: PCT/EP2014/055951
(87) Internationale Veröffentlichungsnummer: WO 2014/166731

(56) Entgegenhaltungen:
- WO-A1-94/21412
- DE-A1- 3 413 290
- DE-A1-102008 018 399
- DE-U1-202010 015 446
- JP-A- H01 321 108
- JP-A- S62 203 711
- US-A- 4 963 059
- US-A1- 2004 120 777
- US-A1- 2006 188 346
- US-A1- 2010 215 447
- US-A1- 2010 226 726
- US-B2- 7 153 067

## Beschreibung

Die Erfindung betrifft ein Fräswerkzeug gemäß Oberbegriff des Anspruchs 1.

Fräswerkzeuge der hier angesprochenen Art sind bekannt (US 2010/0226726 A1 oder DE 34 13 290 A1). Ein solches Fräswerkzeug weist einen Grundkörper auf, der seinerseits eine Mittelachse aufweist. Der Grundkörper umfasst einen Spannbereich, mit dem das Fräswerkzeug an einer Werkzeugmaschine befestigt, insbesondere in ein Spannfutter der Werkzeugmaschine eingespannt werden kann. Außerdem umfasst der Grundkörper einen Arbeitsbereich, mit dem ein Werkstück einer Fräsbearbeitung durch das Fräswerkzeug unterzogen werden kann. Hierzu wird typischerweise das Fräswerkzeug um die Mittelachse gedreht, und das Werkstück und das Fräswerkzeug werden relativ zueinander in einer Ebene bewegt, die senkrecht auf der Mittelachse steht. Auch Relativverlagerungen in Richtung der Mittelachse beziehungsweise mit einer Komponente in Richtung der Mittelachse sind möglich. Es ist möglich, dass das Fräswerkzeug raumfest gehalten wird, wobei das Werkstück verlagert wird. Alternativ ist möglich, dass das Werkstück raumfest gehalten wird, wobei das Fräswerkzeug verlagert wird. Es ist auch möglich, dass sowohl das Fräswerkzeug als auch das Werkstück relativ zueinander verlagert werden. Der Arbeitsbereich des Fräswerkzeugs weist eine Stirnseite und eine - in Richtung der Mittelachse gesehen - an die Stirnseite anschließende Umfangfläche auf. An der Umfangsfläche sind mindestens vier geometrisch definierte Schneidkanten angeordnet. Diese dienen der Fräsbearbeitung des Werkstücks, indem Späne von dem Werkstück durch die Schneidkanten abgetragen werden. Zwei - in Umfangsrichtung gesehen - jeweils unmittelbar einander benachbarte Schneidkanten sind jeweils durch einen Teilungswinkel voneinander beabstandet.

Fräswerkzeuge neigen grundsätzlich während der Fräsbearbeitung zu Ratter-Schwingungen. Diese mindern die Qualität des bearbeiteten Werkstücks, insbesondere die Qualität einer mit Hilfe des Fräswerkzeugs hergestellten Oberfläche, und beeinflussen die Standzeit des Fräswerkzeugs negativ. Um Ratter-Schwingungen zu vermeiden, wird typischerweise eine sehr hohe Systemsteifigkeit angestrebt, welche durch die Werkzeugmaschine, deren Spannfutter und das Fräswerkzeug selbst vorgegeben wird. Es ist jedoch in vielen Fällen möglich, dass die zu bearbeitende Werkstückkontur oder die zur Bearbeitung vorgesehene Werkzeugmaschine keine entsprechend hohe Systemsteifigkeit erlauben. In diesem Fall können Ratter-Schwingungen nur durch geeignete Wahl der Werkzeuggeometrie und/oder durch geeignete Wahl der Schnittwerte, wie beispielsweise eines Vorschubs des Fräswerkzeugs, einer Drehzahl und/oder einer Schnittgeschwindigkeit, vermieden oder zumindest reduziert werden.

Es ist auch bekannt, die Anzahl der Schneiden eines Fräswerkzeugs zu erhöhen, um die Erregungsfrequenz und die Schwingungsamplitude des Fräswerkzeugs so zu beeinflussen, dass das System aus Fräswerkzeug und Werkzeugmaschine während der Bearbeitung nicht resonant in seinen Eigenfrequenzen angeregt wird, wobei es andernfalls extrem zum Schwingen neigen würde. Allgemein verbessert zwar eine hohe Anzahl von Schneidkanten die Ratterneigung, sie führt aber auch zu einer erhöhten Passivkraft, was wiederum eine größere Auslenkung des Fräswerkzeugs zur Folge hat. Hierdurch werden Formfehler an dem bearbeiteten Werkstück unvermeidbar. Hinzu kommt, dass Werkzeuge mit einer großen Zahl von Schneidkanten generell nur für die Schlichtbearbeitung geeignet sind, weil die Größe einzelner, den Schneidkanten zugeordneter Spannuten mit zunehmender Anzahl der Schneidkanten immer kleiner wird.

Es ist auch bekannt, die Laufruhe des Fräswerkzeugs dadurch zu verbessern, dass ein Drallwinkel der vorzugsweise gewendelten Schneidkanten erhöht wird. Hierdurch wird die im Eingriff mit dem Werkstück befindliche Schneidenlänge vergrößert, wodurch aber auch die Passivkraft und die Werkzeugabdrängung erhöht werden. Außerdem ergibt sich durch den größeren Drallwinkel eine vergrößerte Axialkomponente der Schnittkraft, welche tendenziell versucht, das Fräswerkzeug aus der Einspannung an der Werkzeugmaschine herauszuziehen. Bei hoher Belastung ist es daher notwendig, dass Fräswerkzeug zusätzlich zu der herkömmlichen Einspannung gegen Auszug zu sichern, was jedoch die Rundlaufgenauigkeit des Spannfutters verringert.

Als zusätzliche Problematik ergibt sich, dass die Entwicklung neuer Hochleistungs-Schneidstoffe und hochdynamischer Werkzeugmaschinen dazu geführt hat, dass realisierbare Schnittgeschwindigkeiten und auch die Drehzahlen der Werkzeugmaschinen stark gestiegen sind. Damit geht einher, dass sich die Erreger-Frequenzen für Ratter-Schwingungen ebenfalls erhöht haben, womit sie näher an die Eigenfrequenzen der Werkzeugsysteme herangerückt sind. Es ist daher beim Einsatz solcher Hochgeschwindigkeits-Fräswerkzeuge essentiell, Ratter-Schwingungen nach Möglichkeit zu dämpfen.

Zu diesem Zweck werden die Systemeigenfrequenzen beispielsweise mit Hilfe eines Lasermessgerätes ermittelt. Hierzu wird ein Fräswerkzeug in das Spannfutter einer Werkzeugmaschine gespannt und dort mittels eines Impulshammers zu Schwingungen angeregt, wobei zugleich die Eigenfrequenzen gemessen werden. Abhängig von der Anzahl der Schneidkanten, die das Fräswerkzeug aufweist, ist es dann möglich, Drehzahlen für das Fräswerkzeug festzulegen, bei welchen ein Aufschwingen des Systems vermieden wird. Diese Vorgehensweise ist allerdings sehr aufwendig und teuer, daher in der Praxis kaum anwendbar.

Es sind auch Fräswerkzeuge bekannt geworden, bei denen Teilungswinkel zwischen drei - in Umfangsrichtung gesehen - aufeinanderfolgenden Schneiden ungleich ausgebildet sind, wobei die sich hieran - in Umfangsrichtung gesehen - anschließenden Schneidkanten wiederum die gleiche, sich also wiederholende Folge von Teilungswinkeln aufweisen. Insbesondere bei sehr hohen Schnittgeschwindigkeiten und großen Schnitttiefen, wie sie beispielsweise beim Trochoidalfräsen zur Anwendung kommen, können sich allerdings weiterhin Ratter-Schwingungen ergeben, wobei es insbesondere möglich ist, dass Oberschwingungen durch die sich wiederholende Teilung angeregt werden. Beim Trochoidalfräsen bewegt sich das Fräswerkzeug relativ zu dem Werkstück entlang einer Bahnkurve, die eine Trochoide darstellt oder einer Trochoide angenähert ist. Das Trochoidalfräsen wird auch als Pendelfräsen oder Taumelfräsen bezeichnet.

Generell ergibt sich beim Schneiden mit hohen Schnitttiefen, insbesondere also beim Trochoidalfräsen, das Problem, dass sehr lange Späne gebildet werden. Diese können zusätzlich oder alternativ zu gegebenenfalls auftretenden Ratter-Schwingungen die Qualität einer beim Fräsen erzeugten Oberfläche beeinträchtigen oder sogar zu einer Beschädigung dieser Oberfläche und/oder des Fräswerkzeugs führen. Dies gilt besonders für den Fall, dass mit hohen Schnittgeschwindigkeiten gearbeitet wird.

Der Erfindung liegt die Aufgabe zugrunde, ein Fräswerkzeug zu schaffen, welches die genannten Nachteile nicht aufweist. Das Fräswerkzeug soll besonders geeignet sein für große Schnitttiefen und/oder sehr hohe Schnittgeschwindigkeiten, ganz besonders zur Verwendung beim Trochoidalfräsen. Insbesondere soll das Fräswerkzeug eine hohe Dämpfung für Ratter-Schwingungen aufweisen, die unabhängig von den Eigenfrequenzen des Gesamtsystems, bestehend aus der Werkzeugmaschine, dem Spannfutter und dem Fräswerkzeug, ist.

Die Aufgabe wird gelöst, indem ein Fräswerkzeug mit den Merkmalen des Anspruchs 1 geschaffen wird. Dieses ist derart ausgestaltet, dass der Arbeitsbereich - entlang der Mittelachse gesehen - einen ersten Teilungsbereich aufweist, in dem sich alle Teilungswinkel voneinander unterscheiden. Insbesondere sind die Teilungswinkel paarweise voneinander verschieden. Das Fräswerkzeug zeichnet sich dadurch aus, dass alle Schneidkanten entlang ihres Verlaufs jeweils genau eine Unterbrechung aufweisen, wobei alle Unterbrechungen - in axialer Richtung gesehen - zueinander versetzt angeordnet sind. Dass sich in dem ersten Teilungsbereich alle Teilungswinkel voneinander unterscheiden, insbesondere paarweise voneinander verschieden sind, bedeutet, dass kein Teilungswinkel in dem Fräswerkzeug zweimal vorkommt. Hierdurch wird erreicht, dass die Schwingungsanregung, welche impulsartig beim Fräsen durch den Eingriff der einzelnen Schneidkanten mit dem Werkstück erfolgt, konsequent aperiodisch ist. Es ergeben sich - in Umfangrichtung gesehen - keine sich wiederholenden Winkelabstände, so dass keine Eigenfrequenzen des Systems und insbesondere auch keine Oberschwingungen angeregt werden können. Im Gegenteil werden entstehende Schwingungen durch die Aperiodizität der Anregung gedämpft. Dieser Effekt ist nicht nur unabhängig von den tatsächlich vorliegenden Eigenfrequenzen des Systems aus Werkzeugmaschine, Spannfutter und Fräswerkzeug, sondern auch unabhängig von den gewählten Schnittwerten, insbesondere von der Drehzahl und der Vorschubgeschwindigkeit des Fräswerkzeugs. Die Folge ist, dass das Fräswerkzeug eine sehr hohe dynamische Steifigkeit aufweist. Diese wird quasi intrinsisch durch die geometrische Gestaltung des Fräswerkzeugs selbst hervorgerufen, ohne dass es einer umständlichen und aufwendigen Abstimmung auf eine konkrete Werkzeugmaschine bedarf. Auch eine Ermittlung von Eigenfrequenzen des Gesamtsystems mittels Impulshammer und Lasermessung, die aufwendig und teuer ist, kann ohne weiteres vermeiden werden.

Durch die Dämpfung der Ratter-Schwingungen weisen mit dem Fräswerkzeug bearbeitete Werkstücke eine hohe Qualität, insbesondere eine sehr hohe Oberflächengüte auf. Zugleich zeichnet sich das Fräswerkzeug selbst durch eine hohe Lebensdauer beziehungsweise Standzeit aus, weil seine Verschleißneigung durch die konsequente Dämpfung der Ratter-Schwingungen deutlich reduziert ist. Das Fräswerkzeug eignet sich insbesondere für sehr hohe Schnittgeschwindigkeiten und große Schnitttiefen. Besonders geeignet ist das Fräswerkzeug für den Einsatz beim Trochoidalfräsen.

Es wird auch ein Fräswerkzeug bevorzugt, das sich dadurch auszeichnet, dass im ersten Teilungsbereich alle auf einen ganzzahligen Wert abgestimmten Teilungswinkel keinen von 1 verschiedenen gemeinsamen Teiler aufweisen. Insbesondere weisen die auf einen ganzzahligen Wert abgestimmten Teilungswinkel paarweise keinen von 1 verschiedenen gemeinsamen Teiler auf. Durch die konsequente Vermeidung gemeinsamer Teiler in den Teilungswinkeln wird auch eine Anregung von Oberschwingungen sicher vermieden, beziehungsweise gegebenenfalls angeregte Oberschwingungen werden durch die konsequente Aperiodizität des Fräswerkzeugs wirksam gedämpft. Es wird auch ein Fräswerkzeug bevorzugt, das sich dadurch auszeichnet, dass in dem ersten Teilungsbereich mindestens alle auf einen ganzzahligen Wert abgestimmten Teilungswinkel bis auf höchstens einen Teilungswinkel eine Primzahl ergeben. Sind also n Teilungswinkel an dem Fräswerkzeug in dem ersten Teilungsbereich vorhanden, wobei n eine natürliche Zahl ist, weisen mindestens n-1 Teilungswinkel einen auf einen ganzzahligen Wert abgestimmten Betrag auf, der eine Primzahl ist. Besonders bevorzugt weisen alle auf einen ganzzahligen Wert abgestimmten Teilungswinkel einen Betrag auf, der eine Primzahl ist. Bei diesen Ausführungsbeispielen wird konsequent jeder gemeinsame Teiler zwischen den voneinander verschiedenen Teilungswinkeln in dem ersten Teilungsbereich vermieden. Somit liegt keinerlei Periodizität in den Teilungswinkeln vor, und gegebenenfalls bei der Fräsbearbeitung angeregte Ratter-Schwingungen werden konsequent gedämpft. Die Teilungswinkel werden dabei vorzugsweise in Grad angegeben, wobei der Vollkreis 360° umfasst.

Es wird ein Fräswerkzeug bevorzugt, das sich dadurch auszeichnet, dass der erste Teilungsbereich im Bereich einer größten Auskragung - von dem Spannbereich aus in axialer Richtung gesehen - des Arbeitsbereichs angeordnet ist. Bevorzugt ist der erste Teilungsbereich an einem der Stirnseite zugewandten Ende der Schneidkanten, insbesondere unmittelbar an die Stirnseite angrenzend, angeordnet.

Im Bereich der Stirnseite weist das Fräswerkzeug bei einem bevorzugten Ausführungsbeispiel seinen größten Bearbeitungsdurchmesser auf. Es ist möglich, dass der Bearbeitungsdurchmesser des Fräswerkzeugs - in axialer Richtung gesehen - entlang des Arbeitsbereichs konstant ausgebildet ist. Weiterhin ist ein Ausführungsbeispiel möglich, bei welchem der Arbeitsbereich konisch ausgebildet ist, wobei der größte Bearbeitungsdurchmesser vorzugsweise im Bereich der Stirnseite oder an einem dem Spannbereich zugewandten Ende des Arbeitsbereichs angeordnet ist. Es ist möglich, dass ein Durchmesser des Spannbereichs größer ist als der größte Bearbeitungsdurchmesser.

Unabhängig von der Form des Arbeitsbereichs ist der erste Teilungsbereich bevorzugt an dem der Stirnseite zugewandten Ende der Schneidkanten, insbesondere unmittelbar an die Stirnseite angrenzend angeordnet.

Es wird auch ein Fräswerkzeug bevorzugt, das sich dadurch auszeichnet, dass der Arbeitsbereich einen zweiten Teilungsbereich aufweist. Dieser ist - in axialer Richtung gesehen - von dem ersten Teilungsbereich beabstandet. In dem zweiten Teilungsbereich sind alle Teilungswinkel gleich. Insbesondere ergibt sich der Wert der Teilungswinkel in dem zweiten Teilungsbereich zu 360° dividiert durch die Anzahl der Schneidkanten. Die durch die identischen Teilungswinkel hergestellte Symmetrie bewirkt, dass das Fräswerkzeug in dem zweiten Teilungsbereich eine maximale statische Steifigkeit aufweist. Dabei wird in Betrieb des Fräswerkzeugs eine maximale Auslenkung bei umlaufender Kraft reduziert. Insbesondere die Biegesteifigkeit in dem zweiten Teilungsbereich ist verbessert, weil das Werkzeug um die Mittelachse herum symmetrisch ausgebildet ist und somit in alle Richtungen eine gleiche Biegesteifigkeit aufweist. Auf diese Weise wird vermieden, dass sich bei der Fräsbearbeitung im Laufe einer Umdrehung des Werkzeugs verschieden starke Auslenkungen beziehungsweise Biegungen abhängig von dem momentanen Drehwinkel ergeben.

Vorzugsweise ist der zweite Teilungsbereich an einem dem Spannbereich zugewandten Ende der Schneidkanten angeordnet. Dieses Ende ist insbesondere relevant für die statische Steifigkeit, insbesondere für die Biegesteifigkeit des Fräswerkzeugs. Typischerweise ist hier der der Übergangsbereich zwischen dem Arbeitsbereich einerseits und dem Spannbereich andererseits angeordnet, so dass sich an dieser Stelle eine Biegung des Fräswerkzeugs ergibt, wenn dieses im Bereich der Stirnseite senkrecht zur Mittelachse belastet wird. Es ist offensichtlich, dass die statische Steifigkeit beziehungsweise Biegesteifigkeit des Fräswerkzeugs erhöht wird, wenn das Fräswerkzeug in dem Übergangsbereich zwischen dem Arbeitsbereich einerseits und dem Spannbereich andererseits um die Mittelachse herum symmetrisch ausgebildet ist.

Besonders bevorzugt wird ein Fräswerkzeug, bei welchem der erste Teilungsbereich an dem der Stirnseite zugewandten Ende der Schneidkanten angeordnet ist, wobei zugleich der zweite Teilungsbereich an dem Ende der Schneidkanten angeordnet ist, welches dem Spannbereich zugewandt ist. Die beiden Teilungsbereiche liegen sich somit - entlang der Schneidkanten gesehen - gegenüber. Dort, wo bei der Fräsbearbeitung eine maximale Arbeit von den Schneidkanten verrichtet wird, typischerweise nämlich im Bereich der Stirnseite, findet sich dann eine asymmetrische, aperiodische Anordnung der Schneidkanten, wodurch Ratter-Schwingungen effizient gedämpft werden, was zu einer hohen dynamischen Steifigkeit beiträgt. Dort, wo dagegen höchstens eine geringe - wenn überhaupt - Schneidarbeit durch die Schneidkanten verrichtet wird, jedoch eine Biegung des Fräswerkzeugs während der Fräsbearbeitung auftreten kann, findet sich eine symmetrische Verteilung der Schneidkanten, so dass das Werkzeug hier eine hohe Stabilität, insbesondere eine hohe statische Steifigkeit beziehungsweise Biegesteifigkeit aufweist. Somit werden bei dem hier genannten Ausführungsbeispiel beide Effekte in besonders vorteilhafter Weise miteinander kombiniert, wobei für das Werkzeug sowohl eine sehr hohe dynamische als auch eine sehr hohe statische Steifigkeit resultiert.

Es wird auch ein Fräswerkzeug bevorzugt, dass sich dadurch auszeichnet, dass jede Schneidkante einen ihr zugeordneten Drallwinkel aufweist. Die Schneidkanten sind demnach vorzugsweise gewendelt ausgebildet beziehungsweise erstrecken sich schraubenlinienförmig entlang der Umfangsfläche des Fräswerkzeugs. Der Drallwinkel beträgt mindestens 30° bis höchstens 60°. Vorzugsweise beträgt er mindestens 38° bis höchstens 45°.

Es wird auch ein Fräswerkzeug bevorzugt, das sich dadurch auszeichnet, dass alle Drallwinkel voneinander verschieden sind. Insbesondere sind die Drallwinkel paarweise voneinander verschieden. Somit weist jede Schneidkante einen eigenen, von den Drallwinkeln aller anderen Schneidkanten verschiedenen Drallwinkel auf.

Es wird auch ein Fräswerkzeug bevorzugt, das sich dadurch auszeichnet, dass die den Schneidkanten zugeordneten Drallwinkel so auf die verschiedenen Teilungswinkel einerseits und auf den axialen Abstand zwischen dem ersten Teilungsbereich und dem zweiten Teilungsbereich andererseits abgestimmt sind, dass sich - entlang der Schneidkanten gesehen - ein kontinuierlicher Übergang von dem ersten Teilungsbereich zu dem zweiten Teilungsbereich ergibt. Dies bedeutet, dass die Schneidkanten kontinuierlich ausgebildet sind, wobei sie insbesondere entlang einer stetigen und vorzugsweise differenzierbaren Bahnkurve ohne Stufen, Sprünge oder Knicke verlaufen. Diese kontinuierlichen, durchgängigen Schneidkanten verbinden ihre ungleich geteilten, stirnseitigen Enden mit ihren gleichmäßig geteilten, insbesondere - in Umfangsrichtung gesehen - symmetrisch um die Mittelachse verteilten, dem Spannbereich zugewandten Enden, wobei dies durch die entsprechend geeignet gewählten, vorzugsweise voneinander verschiedenen Drallwinkel gewährleistet wird. Es ist dabei offensichtlich, dass bei der konkreten Wahl der Drallwinkel sowohl einerseits die in dem ersten Teilungsbereich verschiedenen Teilungswinkel als auch andererseits der axiale Abstand zwischen dem ersten Teilungsbereich und dem zweiten Teilungsbereich berücksichtigt werden muss.

Es wird auch ein Fräswerkzeug bevorzugt, das sich dadurch auszeichnet, dass der Arbeitsbereich fünf Schneidkanten aufweist. Dies stellt eine günstige Zahl von Schneidkanten dar, bei der einerseits Ratter-Schwingungen effizient gedämpft und andererseits die am Fräswerkzeug im Betrieb angreifenden Kräfte nicht unnötig erhöht werden. Zugleich ist mit fünf Schneidkanten sowohl eine Schlicht- als auch eine Schruppbearbeitung möglich. Selbstverständlich sind Ausführungsbeispiele mit mehr als fünf Schneidkanten möglich.

In diesem Zusammenhang wird ein Fräswerkzeug bevorzugt, dass sich dadurch auszeichnet, dass von den fünf Teilungswinkeln zwischen den fünf Schneidkanten in dem ersten Teilungsbereich ein erster Teilungswinkel 67° beträgt, wobei ein Ausführungsbeispiel möglich ist, bei welchem der erste Teilungswinkel genau 67° beträgt.

Ein weiterer Teilungswinkel beträgt genau 73°. Ein dritter Teilungswinkel beträgt genau 71°. Ein vierter Teilungswinkel beträgt genau 70°. Ein fünfter Teilungswinkel beträgt genau 79°. Somit ergeben die fünf Teilungswinkel addiert genau 360°. Es zeigt sich, dass die fünf Teilungswinkel in dem ersten Teilungsbereich alle voneinander verschieden gewählt sind. Dabei zeigt sich zugleich, dass die fünf Teilungswinkel keinen von 1 verschiedenen gemeinsamen Teiler aufweisen. Insbesondere sind vier der fünf Teilungswinkel, nämlich der erste Teilungswinkel, der zweite Teilungswinkel, der dritte Teilungswinkel und der fünfte Teilungswinkel Primzahlen. Lediglich der vierte Teilungswinkel ist keine Primzahl. Selbstverständlich ist ein Ausführungsbeispiel möglich, bei welchem auch der vierte Teilungswinkel als Primzahl gewählt wird. Dabei ist jedoch bei der konkreten Wahl der Teilungswinkel ebenso selbstverständlich darauf zu achten, dass deren Summe insgesamt 360° ergibt. Insbesondere um diese Forderung erfüllen zu können, ist abhängig von der Anzahl der Schneidkanten und der konkreten Wahl der Teilungswinkel eine Abweichung eines Teilungswinkels von einer Primzahl möglich.

Bei einem bevorzugten Ausführungsbeispiel folgen der erste Teilungswinkel, der zweite Teilungswinkel, der dritte Teilungswinkel, der vierte Teilungswinkel und der fünfte Teilungswinkel - in Umfangsrichtung gesehen - aufeinander, nämlich in der hier angegebenen Reihenfolge. Besonders bevorzugt folgen die Teilungswinkel in der hier angegebenen Reihenfolge entgegen einer Drehrichtung des Fräswerkzeugs gesehen aufeinander, eilen also - in Drehrichtung gesehen - einander nach. Das so ausgebildete Fräswerkzeug weist in dem ersten Teilungsbereich eine vollständige Aperiodizität der Schneidkanten auf, so dass Ratter-Schwingungen unabhängig von der Steifigkeit des Gesamtsystems und unabhängig von einer konkreten Drehzahl des Fräswerkzeugs effizient gedämpft werden. Bei einem anderen Ausführungsbeispiel ist es möglich, dass die Teilungswinkel in einer anderen als der angegebenen Reihenfolge aufeinanderfolgen.

Es wird auch ein Fräswerkzeug bevorzugt, dass sich dadurch auszeichnet, dass mindestens eine Schneidkante eine - in Umfangrichtung gesehen - unmittelbar an die Schneidkante anschließende Freifläche aufweist. Es ist möglich, dass - in Drehrichtung gesehen - der Schneidkante nacheilend verschiedene Freiflächenbereiche vorgesehen sind, so dass die sich unmittelbar an die Schneidkante anschließende Freifläche als erste Freifläche aufgefasst werden kann, an die sich mindestens eine weitere Freifläche anschließt. Es ist jedoch auch möglich, dass nur eine, insoweit durchgängige und homogene Freifläche an die Schneidkante anschließt.

In diesem Zusammenhang wird ein Fräswerkzeug bevorzugt, dass sich dadurch auszeichnet, dass ein der Freifläche zugeordneter Freiwinkel kleiner ist als 4°. In diesem Fall ist die Freifläche vorzugsweise eben ausgebildet, wobei sich ein wohldefinierter Freiwinkel ergibt. Ein Freiwinkel, der kleiner ist 4°, gewährleistet ein ausgewogenes Verhältnis zwischen einer hinreichenden Abstützung und Führung des Fräswerkzeugs einerseits und einer schnittfreudigen Schneidkante andererseits. Die sich in dem an die Schneidkante anschließenden Bereich der Freifläche ergebende Reibung dämpft zusätzlich Ratter-Schwingungen, die bei der Bearbeitung eines Werkstücks auftreten können.

Zusätzlich oder alternativ wird ein Fräswerkzeug bevorzugt, bei welchem die Freifläche eine konvexe Form aufweist. Dabei handelt es sich ebenfalls um eine für die Fräsbearbeitung besonders günstige Form, wobei insbesondere ein der Schneidkante unmittelbar benachbarter Bereich der konvexen Freifläche der Abstützung des Fräswerkzeugs an dem Werkstück dienen kann. Auch bei einer konvexen Freifläche ist es möglich, einen Freiwinkel zu definieren, indem dieser an einer die Schneidkante schneidenden, unmittelbar im Bereich der Schneidkante an die Freifläche angelegten Tangente gemessen wird. Vorzugsweise ist der so definierte Freiwinkel kleiner als 4°.

Es wird auch ein Fräswerkzeug bevorzugt, das sich dadurch auszeichnet, dass die Freifläche eine - in Umfangsrichtung gemessene - Breite aufweist, die mindestens 0,5 % bis höchstens 6 % des größten Durchmessers, insbesondere des größten Bearbeitungsdurchmessers, des Fräswerkzeugs beträgt. Insbesondere beträgt die Breite bevorzugt den angegebenen Prozentsatz des Nenndurchmessers des Fräswerkzeugs. Bei einem bevorzugten Ausführungsbeispiel beträgt die Breite der Freifläche mindestens 1 % bis höchstens 4 % des größten Durchmessers, Bearbeitungsdurchmessers oder des Nenndurchmessers des Fräswerkzeugs. Damit ist die Freifläche vergleichsweise schmal ausgebildet, so dass einerseits eine hinreichende Abstützung des Werkzeugs gewährleistet ist, wobei andererseits eine Reibung der Freifläche an dem Werkstück reduziert ist.

Es wird auch ein nicht zur Erfindung gehörendes Fräswerkzeug beschrieben, bei dem vorgesehen ist, dass wenigstens eine der Schneidkanten entlang ihres Verlaufs mindestens eine Unterbrechung aufweist. Hierdurch ist die Schneidgeometrie der Schneidkante an wenigstens einer Stelle unterbrochen, an der insoweit keine Schneidwirkung auftritt. Die Unterbrechung wirkt als Spanteilergeometrie oder als Spanbrecher. Dadurch entsteht beim Fräsen kein einzelner, langer Span entlang der gesamten Schneidkante, sondern vielmehr eine Mehrzahl voneinander separierter Späne, die jeweils kürzer sind als der ansonsten entstehende einzelne, lange Span. Die kürzeren Späne sind leichter aus dem Bearbeitungsbereich abführbar und bringen ein deutlich verringertes Risiko mit sich, dass die bearbeitete Oberfläche bezüglich ihrer Qualität gemindert oder beschädigt, und/oder dass das Fräswerkzeug, beispielsweise durch Verklemmen der Späne, beschädigt wird. Dieser Vorteil wirkt sich ganz besonders bei der Fräsbearbeitung mit hohen Schnitttiefen und/oder sehr hohen Schnittgeschwindigkeiten aus, somit in besonderer Weise beim Trochoidalfräsen.

Es wird ein Fräswerkzeug bevorzugt, das sich dadurch auszeichnet, dass die Unterbrechung jeweils als Ausnehmung ausgebildet ist. Insbesondere ist es möglich, dass die Unterbrechung als Kerbe in der jeweiligen Schneidkante ausgebildet ist. Bevorzugt ist die Ausnehmung als Nut ausgebildet, welche sich in Umfangsrichtung erstreckt. Dabei ist bevorzugt vorgesehen, dass sich die Nut ausgehend von der jeweiligen Schneidkante in eine an diese anschließende Freifläche hinein erstreckt. Dabei erstreckt sie sich bevorzugt durch die gesamte Freifläche und durchsetzt diese somit. Die Unterbrechung ist als Ausnehmung, insbesondere als Kerbe oder Nut, besonders einfach herstellbar. Dies gilt in besonderer Weise dann, wenn sie als Nut ausgebildet ist, welche die gesamte Freifläche - in Umfangsrichtung gesehen -durchsetzt.

Es wird auch nicht zur Erfindung gehörendes Fräswerkzeug beschrieben, bei dem vorgesehen ist, dass mindestens zwei der Schneidkanten jeweils eine Unterbrechung aufweisen, wobei die Unterbrechungen - in axialer Richtung gesehen - zueinander versetzt angeordnet sind. Die Vorteile der Spanteilergeometrie verwirklichen sich dann an mehr als einer der Schneidkanten. Durch die axiale Relativversetzung der Unterbrechungen zueinander wird gewährleistet, dass nicht axial auf einer Höhe, auf welcher die Unterbrechungen angeordnet sind, Material an der bearbeiteten Oberfläche stehen bleibt, weil es dort nicht durch die Schneidkanten geschnitten wird. Der axiale Versatz führt vielmehr dazu, dass auf jeder axialer Höhe wenigstens eine Schneidkante Schneidwirkung entfaltet, so dass - in axialer Richtung gesehen - nirgendwo an der bearbeiteten Oberfläche Material stehen bleiben kann, weil im Bereich einer Unterbrechung einer ersten Schneidkante stehen gebliebenes Material von wenigstens einer zweiten Schneidkante geschnitten wird.

Erfindungsgemäß weisen alle Schneidkanten jeweils eine Unterbrechung aufweisen, wobei alle Unterbrechungen, - in axialer Richtung gesehen - zueinander versetzt angeordnet sind. Diese Anordnung hat zum einen den Vorteil, dass der Grundkörper des Fräswerkzeugs nicht in einer einzigen Axialposition durch die Mehrzahl von Unterbrechungen geschwächt ist, sondern dass eine mit den Unterbrechungen verbundene Schwächung des Grundkörpers auf verschiedene Axialpositionen verteilt wird. Zum anderen wird mit dieser Anordnung sehr effizient vermieden, dass im Bereich der Unterbrechungen Material an der bearbeiteten Oberfläche stehen bleibt. Prinzipiell genügt es hierzu, dass ein einzige Unterbrechung in axialer Richtung zu den anderen Unterbrechungen versetzt angeordnet ist, wobei dann das von den anderen Unterbrechungen stehen gelassene Material durch die Schneidkante der einen, versetzt angeordneten Unterbrechung geschnitten wird. Dies führt jedoch zu einem hohen Verschleiß an der einen, ausgezeichneten Schneidkante, sowie zu einer sehr ungleichmäßigen Belastung des Fräswerkzeugs. Daher ist es vorteilhaft, wenn alle Unterbrechungen zueinander axial versetzt angeordnet sind, weil so das von einer Unterbrechung einer Schneidkante stehen gelassene Material von allen anderen Schneidkanten geschnitten wird. Anders formuliert entfalten alle Schneidkanten außer einer Schneidkante Schneidwirkung an einer Axialposition, an der die eine Schneidkante ihre Unterbrechung aufweist.

Es wird auch ein nicht zur Erfindung gehörendes Fräswerkzeug beschrieben, das einen eine Mittelachse aufweisenden Grundkörper aufweist, der eine Stirnseite und eine Umfangsfläche aufweist. An der Umfangsfläche ist wenigstens eine geometrisch definierte Schneidkante angeordnet, wobei die Schneidkante entlang ihres Verlaufs mindestens eine Unterbrechung aufweist. Hierdurch wird - wie zuvor bereits beschrieben - eine Spanteilergeometrie beziehungsweise ein Spanbrecher an der Schneidkante bereitgestellt, wodurch die Ausbildung eines einzigen langen Spans entlang der Erstreckung der Schneidkante vermieden wird. Vielmehr wird eine Mehrzahl voneinander unterteilter Späne entlang der Schneidkante erzeugt. Das Werkzeug ist auf diese Weise insbesondere zur Bearbeitung mit sehr hohen Schneidgeschwindigkeiten und/oder hoher Schnitttiefe, somit insbesondere zum Trochoidalfräsen, geeignet.

Das Fräswerkzeug weist eine Mehrzahl von - in Umfangsrichtung gesehen - zueinander beabstandeten Schneidkanten auf. Hierdurch weist das Fräswerkzeug eine besonders hohe Schneidleistung auf.

Die Unterbrechung ist bevorzugt als Ausnehmung, insbesondere als sich in Umfangsrichtung erstreckende Nut, ausgebildet, die sich vorzugsweise ausgehend von der Schneidkante in eine an diese anschließende Freifläche hinein erstreckt. Dadurch ergeben sich die bereits zuvor erläuterten Vorteile.

Alternativ oder zusätzlich ist vorgesehen, dass mindestens zwei Schneidkanten des Fräswerkzeugs jeweils eine Unterbrechung aufweisen, wobei die Unterbrechung - in axialer Richtung gesehen - zueinander versetzt angeordnet sind. Dadurch verwirklichen sich die zuvor bereits erläuterten Vorteile, auf welche insoweit verwiesen wird.

Schließlich wird alternativ oder zusätzlich bevorzugt, dass alle Schneidkanten des Fräswerkzeugs jeweils eine Unterbrechung aufweisen, wobei wenigstens zwei der Unterbrechungen, vorzugsweise alle Unterbrechungen, - in axialer Richtung gesehen - zueinander versetzt angeordnet sind. Auch in diesem Fall verwirklichen sich die bereits zuvor erläuterten Vorteile, auf welche verwiesen wird.

Die Erfindung wird im Folgenden anhand der Zeichnungen näher erläutert. Dabei zeigen:
- Figur 1: Eine Seitenansicht eines ersten, nicht zur Erfindung gehörenden Beispiels eines Fräswerkzeugs;
- Figur 2: eine Querschnittsdarstellung des ersten Beispiels des Fräswerkzeugs gemäß Figur 1 entlang der Schnittlinie A-A;
- Figur 3: eine Querschnittsdarstellung des ersten Beispiels des Fräswerkzeugs gemäß Figur 1 entlang der Schnittlinie B-B;
- Figur 4: eine Detaildarstellung eines in Figur 2 gekennzeichneten Details des Fräswerkzeugs gemäß Figur 1 ;
- Figur 5: eine Seitenansicht eines zweiten, nicht zur Erfindung gehörenden Beispiels eines Fräswerkzeugs, und
- Figur 6: eine Seitenansicht eines Ausführungsbeispiels eines Fräswerkzeugs.

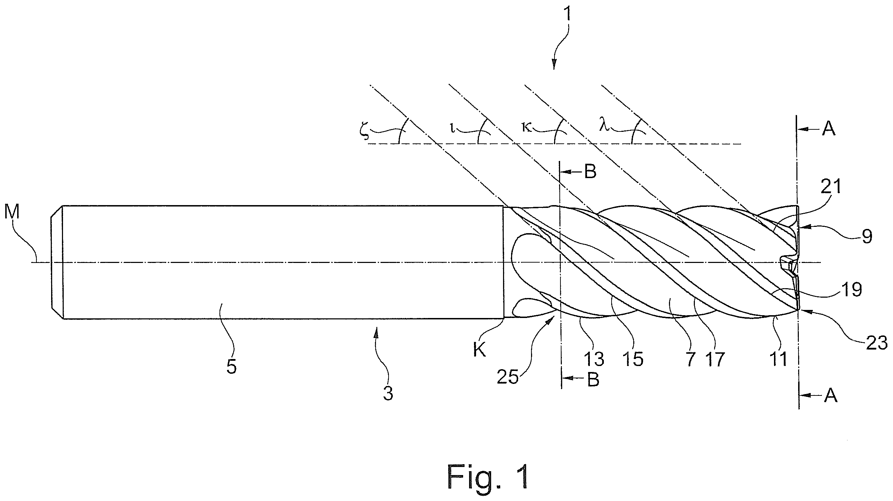

Figur 1 zeigt eine Seitenansicht eines ersten, nicht zur Erfindung gehörenden Beispiels eines Fräswerkzeugs 1. Dieses weist einen Grundkörper 3 mit einer Mittelachse M auf, wobei die Mittelachse M zugleich die Drehachse darstellt, um welche das Fräswerkzeug 1 im Betrieb durch eine Werkzeugmaschine, mit der das Fräswerkzeug wirkbunden ist, gedreht wird.

Der Grundkörper 3 weist einen Spannbereich 5 sowie einen Arbeitsbereich 7 auf. Mit dem Spannbereich 5 ist das Fräswerkzeug 1 mit einer in Figur 1 nicht dargestellten Werkzeugmaschine, insbesondere mit deren Spannfutter, wirkverbindbar. Bei dem dargestellten Beispiel ist der Spannbereich 5 als Spannschaft ausgebildet, der beispielsweise in einem Spannbacken aufweisenden Spannfutter, in einem Schrumpffutter oder in einem Hydro-Dehnspannfutter der Werkzeugmaschine eingespannt werden kann. Dabei erstreckt sich der Spannbereich 5 hier bis zu einer Kante K, an der er in den Arbeitsbereich 7 übergeht. Vorzugsweise erfolgt die Einspannung des Fräswerkzeugs 1 möglichst nah an der Kante K, um in den Arbeitsbereich 7 eingeleitete Kräfte in der Werkzeugmaschine, insbesondere in deren Spannfutter, wirksam abstützen zu können.

Der Arbeitsbereich 7 dient der Bearbeitung eines Werkstücks. Erweist eine Stirnseite 9 sowie eine Umfangsfläche 11 auf, wobei sich die Umfangsfläche 11 - in Richtung der Mittelachse M gesehen, mithin in axialer Richtung gesehen - an die Stirnseite anschließt. Zur Fräsbearbeitung eines nicht dargestellten Werkstücks sind an der Umfangsfläche 11 bei dem in Figur 1 dargestellten Fräswerkzeug 1 fünf geometrisch definierte Schneidkanten, nämlich eine erste Schneidkante 13, eine zweite Schneidkante 15, eine dritte Schneidkante 17, eine vierte Schneidkante 19 und eine fünfte Schneidkante 21 angeordnet.

Bei einem anderen Ausführungsbeispiel ist es möglich, dass vier Schneidkanten an der Umfangsfläche 11 vorgesehen sind. Bei wieder einem anderen Ausführungsbeispiel ist es möglich, dass mehr als fünf Schneidkanten vorgesehen sind, vorzugsweise mindestens sechs Schneidkanten bis höchstens zehn Schneidkanten.

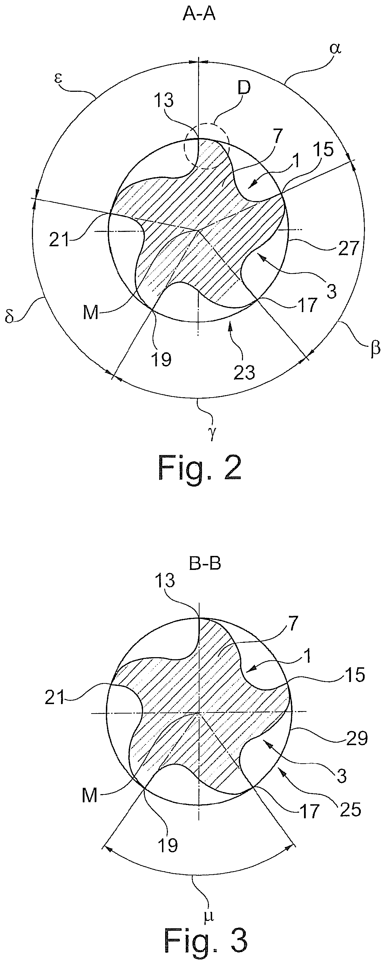

Die Schneidkanten 13, 15, 17, 19, 21 sind - in Umfangsrichtung gesehen -jeweils durch einen Teilungswinkel voneinander beabstandet, wobei dies im Zusammenhang mit den Figuren 2 und 3 noch näher ausgeführt werden wird. In Figur 1 ist bereits dargestellt, dass der Arbeitbereich 7 - entlang der Mittelachse M gesehen - einen ersten Teilungsbereich 23 aufweist, in dem alle Teilungswinkel voneinander verschieden sind. Die in Figur 1 dargestellte Schnittlinie A-A schneidet den ersten Teilungsbereich 23. Dieser ist bei dem dargestellten Beispiel an dem der Stirnseite 9 zugewandten Ende der Schneidkanten 13, 15, 17, 19, 21 angeordnet und schließt sich bevorzugt - in axialer Richtung gesehen - unmittelbar an die Stirnseite 9 an, beziehungsweise ist auf Höhe der Stirnseite 9 angeordnet. Bei einem anderen Ausführungsbeispiel ist es möglich, dass der erste Teilungsbereich 23 von der Stirnseite 9 - in axialer Richtung gesehen - beabstandet ist. Bevorzugt ist der erste Teilungsbereich 23 allerdings im Bereich einer größten Auskragung des Arbeitsbereichs 7 angeordnet, wobei die Auskragung in axialer Richtung - von der Einspannung des Fräswerkzeugs ausgehend - gemessen ist.

Generell spricht eine axiale Richtung hier eine Richtung an, die sich parallel zu der Mittelachse M erstreckt. Eine radiale Richtung spricht eine Richtung an, die senkrecht auf der Mittelachse M steht. Eine Umfangsrichtung spricht eine Richtung an, die sich konzentrisch um die Mittelachse M herum erstreckt.

Dadurch, dass das Fräswerkzeug 1 in dem ersten Teilungsbereich 23 Teilungswinkel aufweist, die alle voneinander verschieden sind, ergibt sich für das Fräswerkzeug 1 eine sehr hohe dynamische Steifigkeit. Die Schwingungsanregung, die bei der Bearbeitung eines Werkstücks durch die Schneidkanten 13, 15, 17, 19, 21 impulsartig erfolgt, ist konsequent aperiodisch. Daher ergibt sich unabhängig von einer Eigenfrequenz des Gesamtsystems und unabhängig von den Schnittwerten, insbesondere unabhängig von einer Schnittgeschwindigkeit und einer Drehzahl des Fräswerkzeugs 1, eine hervorragende Dämpfung der durch die Schneidkanten 13, 15, 17, 19, 21 angeregten Schwingungen.

Der Arbeitsbereich 7 weist einen zweiten Teilungsbereich 25 auf, der - in axialer Richtung gesehen - von dem ersten Teilungsbereich 23 beabstandet ist. Insbesondere ist der zweite Teilungsbereich 25 vorzugsweise in der Nähe der Einspannung des Fräswerkzeugs 1, mithin insbesondere in der Nähe des Spannbereichs 5 beziehungsweise der Kante K angeordnet. Bei dem dargestellten Beispiel ist der zweite Teilungsbereich 25 auf Höhe der Schnittlinie B-B angeordnet, die insoweit den zweiten Teilungsbereich 25 schneidet. Es zeigt sich, dass der zweite Teilungsbereich 25 hier an einem dem Spannbereich 5 zugewandten Ende der Schneidkanten 13, 15, 17, 19, 21 angeordnet ist.

In dem zweiten Teilungsbereich 25 sind alle Teilungswinkel zwischen je zwei Schneidkanten 13, 15, 17, 19, 21 gleich groß. Diese - in Umfangsrichtung gesehen - symmetrische Verteilung der Teilungswinkel verleiht dem Fräswerkzeug 1 eine maximale statische Steifigkeit, insbesondere indem die Biegesteifigkeit des Fräswerkzeugs 1 in der Nähe der Einspannung - in Umfangsrichtung gesehen - symmetrisch beziehungsweise gleichverteilt ist. Eine mit dem momentanen Drehwinkel, insbesondere von Schneidkante zu Schneidkante, variierende Biegung des Fräswerkzeugs 1 während der Bearbeitung eines Werkstücks wird somit vermieden, und die maximale Auslenkung des Fräswerkzeugs 1 bei umlaufender Kraft wird reduziert.

Es zeigt sich, dass durch die voneinander beabstandeten Teilungsbereiche 23, 25 die Teilungswinkel vorzugsweise - bevorzugt kontinuierlich - mit zunehmender Nähe zu einer Einspannung des Fräswerkzeugs 1, mithin zu der Kante K hin, sich immer mehr annähern und schließlich einander gleich werden.

Die Schneidkanten 13, 15, 17, 19, 21 sind bei dem dargestellten Beispiel schraubenlinienförmig beziehungsweise gewendelt ausgebildet. Dabei weist jede Schneidkante 13, 15, 17, 19, 21 einen ihr zugeordneten Drallwinkel auf. Dieser beträgt mindestens 30° bis höchstens 60°, vorzugsweise mindestens 38° bis höchstens 45°. Der ersten Schneidkante 13 ist dabei ein erster Drallwinkel zugeordnet, der in Figur 1 allerdings verdeckt und somit nicht dargestellt ist. Der zweiten Schneidkante 15 ist ein zweiter Drallwinkel ζ zugeordnet. Der dritten Schneidkante 17 ist ein dritter Drallwinkel i zugeordnet. Der vierten Schneidkante 19 ist ein vierter Drallwinkel κ zugeordnet. Der fünften Schneidkante 21 ist schließlich ein fünfter Drallwinkel λ zugeordnet. Der nicht dargestellte, erste Drallwinkel sowie die Drallwinkel ζ, ι, κ, λ sind alle voneinander verschieden. Dabei sind die den Schneidkanten 13, 15, 17, 19, 21 zugeordneten Drallwinkel, nämlich der nicht dargestellte Drallwinkel sowie die Drallwinkel ζ, ι, κ, λ so auf die verschiedenen Teilungswinkel einerseits und auf den - in axialer Richtung gemessenen - Abstand zwischen dem ersten Teilungsbereich 23 und dem zweiten Teilungsbereich 25 andererseits abgestimmt, dass sich entlang der Schneidkanten 13, 15, 17, 19, 21 ein kontinuierlicher Übergang von dem ersten Teilungsbereich 23 zu dem zweiten Teilungsbereich 25 ergibt. Auf diese Weise wird gewährleistet, dass die Teilungswinkel von dem ersten Teilungsbereich 23 ausgehend mit zunehmender Nähe zu der Einspannung des Fräswerkzeugs 1 sich einander angleichen und schließlich gleich werden. Dies erfolgt kontinuierlich, also ohne Sprünge oder Stufen in den Schneidkanten 13, 15, 17, 19, 21. Die entsprechende Kombination aus einer Ungleichteilung der Teilungswinkel im Bereich der größten Werkzeugauskragung, nämlich in dem ersten Teilungsbereich 23, und einer Gleichteilung der Teilungswinkel an dem aufnahmeseitigen Ende der Schneidkanten 13, 15, 17, 19, 21 führt zu einer Kombination einer maximal möglichen dynamischen Steifigkeit mit einer maximal möglichen statischen Steifigkeit, woraus sich insgesamt eine sehr geringe Werkzeugauslenkung durch die bei der Bearbeitung eines Werkstücks auftretenden Schnittkräfte ergibt. Hierdurch wird eine wesentliche Voraussetzung erfüllt, um Bauteile mit hoher Genauigkeit, insbesondere bei sehr hohen Schnittgeschwindigkeiten und großen Schnitttiefen, wie sie beispielsweise beim Trochoidalfräsen auftreten, gewährleisten zu können.

Es zeigt sich Folgendes: Das Fräswerkzeug 1 wird vorzugsweise mit dem Spannbereich 5 derart in einem Spannfutter einer Werkzeugmaschine aufgenommen, das es möglichst nah an der Kante K eingespannt ist. Dadurch ergibt sich eine möglichst große Nähe des zweiten Spannbereichs 25 zu der Einspannung des Fräswerkzeugs 1. Auf diese Weise wird insbesondere eine hohe statische Steifigkeit des Fräswerkzeugs 1 sichergestellt.

Figur 2 zeigt eine Querschnittsansicht des Fräswerkzeugs 1 gemäß Figur 1 entlang der Schnittlinie A-A. Gleiche und funktionsgleiche Elemente sind mit gleichen Bezugszeichen versehen, sodass insofern auf die vorangegangene Beschreibung verwiesen wird. Dargestellt sind insbesondere die fünf Schneidkanten 13, 15, 17, 19, 21, die hier im Bereich der größten Auskragung des Arbeitsbereichs 7 einen Flugkreis 27 definieren, auf dem sie sich bei einer Drehung des Fräswerkzeugs 1 - in Figur 2 entgegen dem Uhrzeigersinn - bewegen, und der insoweit einen Bearbeitungsdurchmesser des Fräswerkzeugs 1 definiert.

Anhand von Figur 2 wird deutlich, dass jeweils zwei - in Umfangsrichtung gesehen - unmittelbar benachbarte Schneidkanten durch einen Teilungswinkel voneinander beabstandet sind. So sind hier die erste Schneidkante 13 und die zweite Schneidkante 15 durch einen ersten Teilungswinkel α voneinander beabstandet. Die zweite Schneidkante 15 und die dritte Schneidkante 17 sind durch einen zweiten Teilungswinkel β voneinander beabstandet. Die dritte Schneidkante 17 und die vierte Schneidkante 19 sind durch einen Teilungswinkel γ voneinander beabstandet. Die vierte Schneidkante 19 ist von der fünften Schneidkante 21 durch einen vierten Teilungswinkel δ beabstandet. Schließlich ist die fünfte Schneidkante 21 wiederum von der ersten Schneidkante 13 durch einen fünften Teilungswinkel ε beabstandet. Die Teilungswinkel α, β, γ, δ, ε sind alle voneinander verschieden. Dies bedeutet insbesondere, dass keine zwei Teilungswinkel α, β, γ, δ, ε einen gemeinsamen Wert aufweisen.

Besonders bevorzugt weisen in dem ersten Teilungsbereich 23 alle auf einen ganzzahligen Wert abgestimmten Teilungswinkel α, β, γ, δ, ε keinen gemeinsamen Teiler auf, der von 1 verschieden ist. Bei einem besonders bevorzugten Ausführungsbeispiel sind mindestens vier der fünf Teilungswinkel α, β, γ, δ, ε - auf einen ganzzahligen Wert abgestimmten - Primzahlen. Es ist auch ein Ausführungsbeispiel möglich, bei dem alle Teilwinkel α, β, γ, δ, ε Primzahlen sind. Zugleich muss jedoch gewährleistet werden, dass sich die Teilungswinkel α, β, γ, δ, ε insgesamt auf 360° addieren, was abhängig von der konkreten Anzahl der Schneidkanten 13, 15, 17, 19, 21 dadurch gewährleistet werden kann, dass ein Teilungswinkel nicht prim gewählt ist. Durch den Verzicht auf einen von 1 verschiedenen gemeinsamen Teiler beziehungsweise der Festlegung bei n Schneidkanten von mindestens n-1 Teilungswinkel, die - auf einen bestimmten

Wert gerundet - Primzahlen ergeben, wird gewährleistet, dass auch Oberschwingungen, die durch den Eingriff der Schneidkanten 13, 15, 17, 19, 21 in ein Werkstück angeregt werden, konsequent gedämpft werden.

Es wird ein Ausführungsbeispiel bevorzugt, bei welchem der erste Teilungswinkel a auf einen ganzzahligen Wert genau 67° beträgt, wobei der zweite Teilungswinkel β auf einen ganzzahlingen Wert genau 73° beträgt, wobei der dritte Teilungswinke γ auf einen ganzzahligen Wert genau 71 ° beträgt, wobe der vierte Teilungswinkel δ auf einen ganzzahligen Wert genau 70° beträgt, und wobei der fünfte Teilungswinkel ε auf einen ganzzahligen Wert genau 79° beträgt. Die hier konkret angegebenen Werte für den ersten Teilungswinkel α, den zweiten Teilungswinkel β, den dritten Teilungswinkel γ und den fünften Teilungswinkel ε sind mit 67°, 73°, 71° und 79° Primzahlen. Lediglich der vierte Teilungswinkel δ weist mit 70° keine Primzahl auf. Durch die Wahl des vierten Teilungswinkels δ wird allerdings sichergestellt, dass sich die Teilungswinkel α, β, γ, δ, ε insgesamt zu 360° addieren.

Anhand von Figur 2 zeigt sich ohne Weiteres, dass bei dem dargestellten Beispiel der erste Teilungswinkel α, der zweite Teilungswinkel β, der dritte Teilungswinkel γ, der vierte Teilungswinkel δ und der fünfte Teilungswinkel ε - in Umfangsrichtung gesehen - aufeinanderfolgen. Es zeigt sich auch, dass eine Drehrichtung des Fräswerkzeugs 1 in Figur 2 entgegen dem Uhrzeigersinn verläuft, sodass die Teilungswinkel in ihrer Reihenfolge entgegen der Drehrichtung des Fräswerkzeugs, nämlich im Uhrzeigersinn, aufeinanderfolgen. Dies bedeutet, dass bei einer Drehung des Fräswerkzeugs 1 um die Mittelachse M der erste Teilungswinkel α dem zweiten Teilungswinkel β voreilt, wobei der zweite Teilungswinkel β dem dritten Teilungswinkel γ voreilt, wobei der dritte Teilungswinkel γ dem vierten Teilungswinkel δ voreilt, und wobei schließlich der vierte Teilungswinkel δ dem fünften Teilungswinkel ε voreilt. Bei einem anderen Ausführungsbeispiel ist eine andere Abfolge der Teilungswinkel α, β, γ, δ, ε - in Umfangsrichtung gesehen - möglich.

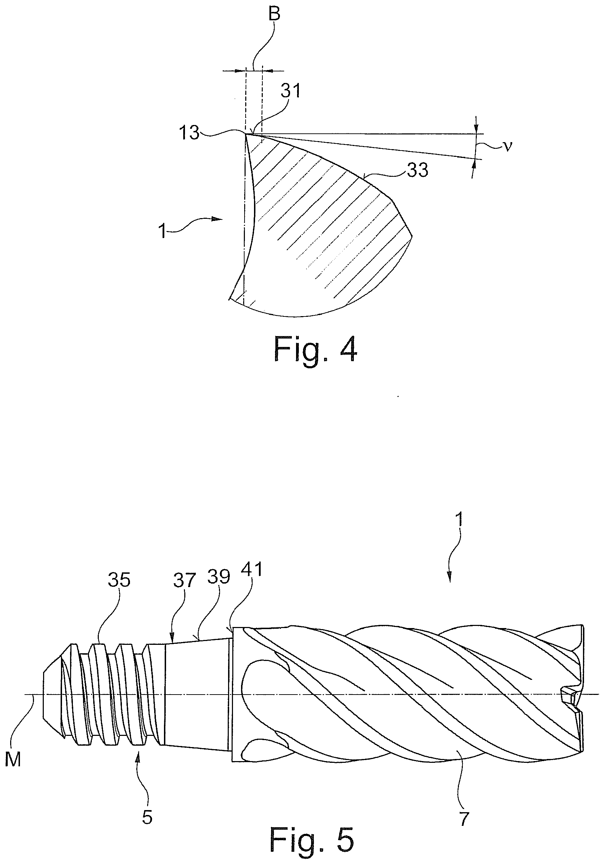

In Figur 2 ist durch einen mit dem Bezugszeichen D gekennzeichneten Kreis noch ein Detail gekennzeichnet, welches vergrößert in Figur 4 dargestellt ist und in Zusammenhang mit dieser erläutert werden wird. Figur 3 zeigt einen Querschnitt durch das Fräswerkzeug 1 gemäß Figur 1 entlang der Schnittlinie B-B. Gleiche und funktionsgleiche Elemente sind mit gleichen Bezugszeichen versehen, sodass insofern auf die vorangegangene Beschreibung verwiesen wird. Dargestellt ist hier also der zweite Teilungsbereich 25 in Querschnittsansicht. Wie bereits beschrieben, weisen hier alle Schneidkanten 13, 15, 17, 19, 21 jeweils paarweise - in Umfangsrichtung gesehen - einen gleichen Winkelabstand voneinander auf, sodass hier fünf konstante Teilungswinkel mit vorzugsweise jeweils genau 72° gegeben sind, von denen der besseren Übersichtlichkeit wegen nur einer dargestellt und mit dem Bezugszeichen µ bezeichnet ist. Damit ergibt sich für das Fräswerkzeug 1 eine symmetrische Biegesteifigkeit um die Mittelachse M herum, nämlich in alle Richtungen senkrecht zur Mittelachse M. Somit ist eine maximale statische Steifigkeit im Bereich der Einspannung des Fräswerkzeugs 1 gewährleistet. Die Schneidkanten 13, 15, 17, 19, 21 beschreiben hier im übrigen ebenfalls einen Flugkreis 29 bei einer Drehung des Fräswerkzeugs 1.

Figur 4 zeigt eine vergrößerte Darstellung des in Figur 2 mit dem Kreis D gekennzeichneten Details. Dargestellt ist hier nur die erste Schneidkante 13. Vorzugsweise gilt allerdings das hier in Zusammenhang mit der ersten Schneidkante 13 Ausgeführte für alle Schneidkanten 13, 15, 17, 19, 21 des Fräswerkzeugs 1. Es ist allerdings auch ein Ausführungsbeispiel möglich, bei dem die folgenden Merkmale nur bei einer Schneidkante verwirklicht sind. Weiterhin ist ein Ausführungsbeispiel möglich, bei welchem die hier dargestellten Merkmale zwar bei mehr als einer Schneidkante, nicht jedoch bei allen Schneidkanten verwirklicht sind. Wenn im Folgenden demnach in Zusammenhang mit Figur 4 nur auf die erste Schneidkante 13 Bezug genommen wird, bedeutet dies keine Einschränkung in Hinblick auf die Zahl der Schneidkanten, bei denen die hier dargestellten Merkmale verwirklicht sind.

Anhand von Figur 4 zeigt sich, dass sich unmittelbar an die Schneidkante 13 - in Umfangsrichtung gesehen - eine Freifläche 31 anschließt. Bei dem dargestellten Beispiel schließt sich von der Schneidkante 13 ausgehend - in Umfangsrichtung und entgegen der Drehrichtung des Fräswerkzeugs 1 gesehen - an die Freifläche 31 eine weitere Freifläche 33 an, sodass hier die Freifläche 31 als erste Freifläche und die weitere Freifläche 33 als zweite Freifläche aufgefasst werden können. Es ist allerdings auch ein Ausführungsbeispiel möglich, bei dem sich an die Freifläche 31 keine weitere Freifläche anschließt, sodass die Freifläche 31 als einzige Freifläche ausgebildet ist, die der Schneidkante 13 zugeordnet ist.

Ein der Freifläche 31 zugeordneter Freiwinkel v ist vorzugsweise kleiner als 4°. Dabei wird insbesondere bevorzugt, dass die Freifläche 31 mit der Bildebene von Figur 4 eine Schnittlinie bildet, welche die Form einer Geraden hat, beziehungsweise dass die Freifläche 31 im Wesentlichen eben ausgebildet ist.

Es ist auch möglich, dass die Freifläche 31 eine konvexe Form aufweist, ähnlich wie es in Figur 4 für die zweite Freifläche 33 dargestellt ist. Auch in diesem Fall ist es möglich, der Freifläche 31 einen Freiwinkel zuzuordnen, wobei dieser vorzugsweise durch Anlegen einer Tangente an die Schnittlinie der Freifläche 31 in der Bildebene von Figur 4 bestimmt wird, wobei die Tangente durch den Schnittpunkt der Schneidkante 13 mit der Bildebene von Figur 4 verläuft. Vorzugsweise ist auch der so definierte Freiwinkel kleiner als 4°.

Die Freifläche 31 weist - in der Bildebene von Figur 4 beziehungsweise in Umfangsrichtung gemessen - eine Breite B auf, die mindestens 0,5 % bis höchstens 6 %, vorzugsweise mindestens 1 % bis höchstens 4 % des größten Durchmessers, insbesondere des größten Bearbeitungsdurchmessers oder des Nenndurchmessers, des Fräswerkzeugs 1 beträgt.

Die anhand von Figur 4 erläuterten Merkmale sind insbesondere in dem ersten Teilungsbereich 23 verwirklicht. Vorzugsweise sind sie allerdings bei einem Ausführungsbeispiel des Fräswerkzeugs 1 auch in dem zweiten Teilungsbereich 25 verwirklicht. Besonders bevorzugt sind die Merkmale entlang der gesamten Erstreckung der Schneidkanten 13, 15, 17, 19, 21 verwirklicht, jedenfalls an den Schneidkanten, an welchen die Merkmale überhaupt vorgesehen sind.

Figur 5 zeigt eine Seitenansicht eines zweiten, nicht zur Erfindung gehörenden Beispiels des Fräswerkzeugs 1. Gleiche und funktionsgleiche Elemente sind mit gleichen Bezugszeichen versehen, sodass insofern auf die vorangegangene Beschreibung verwiesen wird. Das in Figur 5 dargestellte Beispiel unterscheidet sich von dem ersten Beispiel gemäß Figur 1 durch die konkrete Ausbildung des Spannbereichs 5. Dieser umfasst hier ein Außengewinde 35, mit dem er in ein entsprechendes Innengewinde einer Spannvorrichtung einer Werkzeugmaschine einschraubbar ist. Dabei weist der Spannbereich 5 außerdem einen Zentrierabschnitt 37 mit einer kegelabschnittsförmigen Umfangsfläche beziehungsweise Kegelaußenfläche 39 auf, die mit einer entsprechenden Kegelinnenfläche der Spannvorrichtung zusammenwirkt, um das Fräswerkzeug 1 bezüglich einer Lage der Mittelachse M, insbesondere in radialer Richtung, zu fixieren beziehungsweise festzulegen. Für eine Festlegung beziehungsweise Fixierung des Fräswerkzeugs 1 in axialer Richtung weist dieses vorzugsweise eine Anschlagsschulter 41 auf, die als Ringfläche um die Kegelaußenfläche 39 herum ausgebildet ist. Die Anschlagsschulter 41 liegt dabei in eingespanntem Zustand vorzugsweise an einer Planfläche der Spannvorrichtung an, wobei die Planfläche bevorzugt ebenfalls als Ringfläche ausgebildet ist, die eine Spannausnehmung der Spannvorrichtung umgreift. Auf diese Weise ist es möglich, das Fräswerkzeug 1 in der Werkzeugmaschine sowohl in axialer Richtung als auch in radialer Richtung optimal auszurichten und festzulegen.

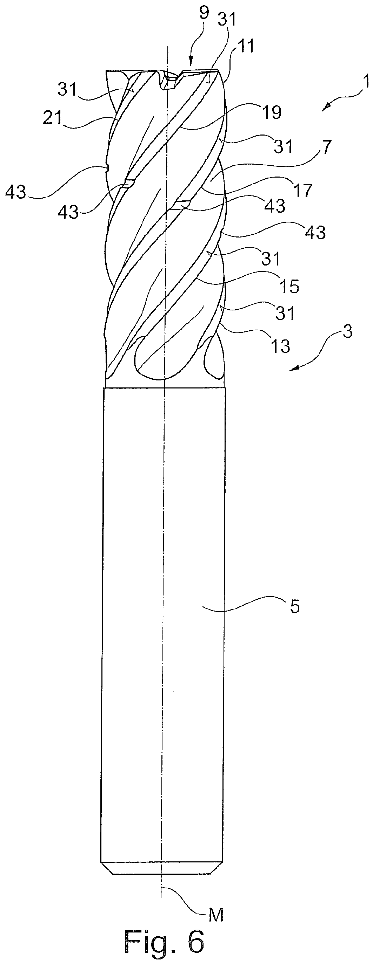

Figur 6 zeigt eine Seitenansicht eines Ausführungsbeispiels des Fräswerkzeugs 1. Gleiche und funktionsgleiche Elemente sind mit gleichen Bezugszeichen versehen, so dass insofern auf die vorangegangene Beschreibung verwiesen wird. Das Fräswerkzeug 1 weist an wenigstens einer geometrisch definierten Schneidkante 13, 15, 17, 19, 21, hier bevorzugt an allen geometrisch definierten Schneidkanten 13, 15, 17, 19, 21 eine Unterbrechung 43 auf. Dabei sind in Figur 6 nur vier der Unterbrechungen 43 dargestellt, während die fünfte Unterbrechung, die an der Schneidkante 13 vorgesehen ist, an der dem Betrachter abgewandten Seite des Fräswerkzeugs 1 angeordnet und daher nicht dargestellt ist. Die Unterbrechungen 43 unterbrechen den Verlauf der Schneidkanten 13, 15, 17, 19, 21 an der Umfangsfläche 11, so dass in ihrem Bereich keine Schneidwirkung gegeben ist. Sie wirken daher als Spanteilergeometrie beziehungsweise als Spanbrecher. Statt eines langen Spans wird so bei der Bearbeitung eines Werkstücks mit dem Fräswerkzeug 1 eine Mehrzahl voneinander getrennter Späne erzeugt. Das hier dargestellte Ausführungsbeispiel des Fräswerkzeugs 1 weist pro Schneidkante 13, 15, 17, 19, 21 genau eine Unterbrechung 43 auf, so dass im Bereich jeder Schneidkante 13, 15, 17, 19, 21 ein in zwei Teile geteilter Span beziehungsweise zwei Späne anfallen. Diese können leichter aus einer Bearbeitungszone herausbefördert werden, als ein einziger, entlang der gesamten Schneidkante 13, 15, 17, 19, 21 gebildeter, langer Span. Daher wird eine Beschädigung oder Verringerung der Qualität einer mit dem Fräswerkzeug 1 bearbeiteten Oberfläche sowie zugleich eine Beschädigung oder Zerstörung des Fräswerkzeugs 1 selbst vermieden. Diese Vorteile wirken sich in besonderer Weise bei großen Schnitttiefen - in axialer Richtung gemessen - sowie sehr hohen Schnittgeschwindigkeiten auf, wie sie typischerweise beim Trochoidalfräsen auftreten. Daher ist das Fräswerkzeug 1 besonders für den Einsatz beim Trochoidalfräsen geeignet.

Vorzugsweise ist das Ausführungsbeispiel des Fräswerkzeugs 1 gemäß Figur 6 bis auf die Unterbrechungen 43 identisch ausgebildet zu einem der zuvor dargestellten Beispiele der Figuren 1 bis 5.

Die Unterbrechungen 43 sind hier als Nuten ausgebildet, die sich ausgehend von den Schneidkanten 13, 15, 17, 19, 21 - in Umfangsrichtung gesehen - in an diese anschließende Freiflächen 31 hinein erstrecken. Besonders bevorzugt durchsetzen sie die gesamten Freiflächen 31 - in Umfangsrichtung gesehen. Auf diese Weise sind die Unterbrechungen 43 besonders einfach und kostengünstig herstellbar. Anhand von Figur 6 zeigt sich auch, dass bei dem dort dargestellten Ausführungsbeispiel die Unterbrechungen 43 - in axialer Richtung gesehen - zueinander versetzt angeordnet sind. Dabei sind alle Unterbrechungen 43 hier in verschiedenen Axialpositionen angeordnet. Dies hat den Effekt, dass ein Bereich einer bearbeiteten Werkstückoberfläche, der mit einer Unterbrechung 43 in Eingriff kommt, wodurch hier bei der Bearbeitung Material stehen bleibt, von allen anderen Schneidkanten, welche die hier konkret betrachtete Unterbrechung 43 nicht aufweisen, bearbeitet wird. Beispielsweise wird der Bereich der Werkstückoberfläche, welcher mit der Unterbrechung 43 der dritten Schneidkante 17 in Eingriff kommt, wobei dort korrespondierend zu der Unterbrechung 43 Material stehen bleibt, von allen anderen Schneidkanten 13, 15, 17, 19, 21 bearbeitet, weil diese in der entsprechenden Axialposition keine Unterbrechung aufweisen.

Ein bevorzugtes Ausführungsbeispiel des Fräswerkzeugs 1 weist einen - bevorzugt in axialer Richtung gesehen konstanten - Bearbeitungsdurchmesser von 12 mm, eine - in axialer Richtung gemessene - Länge der Schneidkanten 13, 15, 17, 19, 21 von 37 mm sowie fünf Schneidkanten 13, 15, 17, 19, 21 auf. Die Teilungswinkel haben dabei folgende Werte: Der erste Teilungswinkel α beträgt 67°, der zweite Teilungswinkel β beträgt 73°, der dritte Teilungswinkel γ beträgt 71°, der vierte Teilungswinkel δ beträgt 70°, und der fünfte Teilungswinkel ε beträgt 79°, wobei diese die genauen Beträge der Teilungswinkel sind. Der identische Teilungswinkel µ in dem zweiten Teilungsbereich 25 beträgt 72°, mithin 360° geteilt durch die Anzahl der Schneidkanten, hier nämlich fünf.

Ein solches Ausführungsbeispiel des Fräswerkzeugs 1 wurde in verschiedenen Versuchen getestet:
In einem ersten Versuch wurde rostfreier, austenitischer Stahl mit der Werkstoffnummer 1.4301 bearbeitet, wobei ein Bauteil durch Trochoidalfräsen ausgekammert wurde. Dabei betrug ein Eingriffswinkel mindestens 10° bis höchstens 35° bei konstanter mittlerer Spanungsdicke. Die Variation des Eingriffswinkels ergibt sich daraus, dass das Fräswerkzeug 1 beim Trochoidalfräsen eine gekrümmte Bahnkurve beschreibt. Die mittlere Spanungsdicke betrug 0,05 mm. Der Vorschub pro Umdrehung des Werkzeugs wurde variabel ausgeführt, insbesondere abhängig von einer Eingriffbreite über der mittleren Spanungsdicke. Die Schnittgeschwindigkeit betrug 250 m/min. Dabei zeigte sich, dass das Werkzeug über seine gesamte Standzeit schwingungsfrei eingesetzt werden konnte. Es ergab sich an dem Fräswerkzeug 1 ein sehr gleichmäßiges Verschleißbild.

In einem zweiten Versuch wurde das Werkzeug zur Bearbeitung eines Werkstücks aus Einsatzstahl mit DIN-Werkstoffnummer 1.7131 eingesetzt. Es wurde wiederum zum Auskammern eines Werkstücks durch Trochoidalfräsen hier mit einem Eingriffswinkel von mindestens 10° bis höchstens 45° bei konstanter mittlerer Spanungsdicke eingesetzt. Die Schnitttiefe - in axialer Richtung gemessen - betrug 36 mm. Die Schnittgeschwindigkeit betrug 600 m/min. Die mittlere Spanungsdicke betrug 0,1 mm. Der Vorschub pro Umdrehung wurde variabel gestaltet, insbesondere abhängig von der Eingriffbreite über der mittleren Spanungsdicke. Dabei zeigte sich, dass das Werkzeug über seine gesamte Standzeit schwingungsfrei eingesetzt werden konnte, wobei sich ein sehr gleichmäßiges Verschleißbild an dem Fräswerkzeug 1 ergab.

In einem dritten Versuch wurde das Fräswerkzeug zur Bearbeitung eines Werkstücks eingesetzt, welches aus einer Titanlegierung mit der Werkstoffnummer 3.7165 bestand. Auch hier wurde ein Werkstück durch Trochoidalfräsen ausgekammert, mit einem Eingriffswinkel von mindestens 10° bis höchstens 25° bei konstanter mittlerer Spanungsdicke. Die Schnitttiefe betrug 34 mm. Die Schnittgeschwindigkeit betrug 180 m/min. Die mittlere Spanungsdicke betrug 0,07 mm. Der Vorschub pro Umdrehung wurde variabel gewählt, insbesondere abhängig von einer Eingriffbreite über der mittleren Spanungsdicke. Auch bei diesem dritten Versuch zeigte sich, dass das Fräswerkzeug 1 über seine gesamte Standzeit schwingungsfrei eingesetzt werden konnte, wobei sich ein sehr gleichmäßiges Verschleißbild ergab.

Damit zeigt sich insgesamt, dass mit dem Fräswerkzeug 1 ein Werkzeug geschaffen ist, das auch bei sehr hohen Schnittgeschwindigkeiten und großen Schnitttiefen, wie sie beispielsweise beim Trochoidalfräsen angewendet werden, zur Schaffung hochgenauer Oberflächen eingesetzt werden kann, wobei sich zugleich ein äußerst geringer Verschleiß des Fräswerkzeugs 1 ergibt. Dies liegt zum einen daran, dass sich durch die intrinsischen, geometrischen Eigenschaften des Fräswerkzeugs 1, insbesondere durch die Wahl der Teilungswinkel in dem ersten Teilungsbereich 23 und vorzugsweise auch in dem zweiten Teilungsbereich 25, hervorragende Eigenschaften ergeben, wobei Ratter-Schwingungen unabhängig von den Eigenfrequenzen des eingesetzten Werkzeugs-Systems sowie auch unabhängig von der Wahl einer konkreten Drehzahl konsequent gedämpft werden. Zum anderen wird eine Beschädigung des Fräswerkzeugs 1 und/oder der bearbeiteten Werkstückoberfläche sowie eine Beeinträchtigung von deren Qualität selbst bei hohen Schnitttiefen und sehr hohen Schnittgeschwindigkeiten wirksam durch die Unterbrechungen 43 der Schneidkanten 13, 15, 17, 19, 21 vermieden, indem die ansonsten sehr langen Späne durch die Unterbrechungen 43 geteilt werden.

## Patentansprüche

1. Fräswerkzeug (1) mit einem eine Mittelachse (M) aufweisenden Grundkörper (3), der einen Spannbereich (5) und einen Arbeitsbereich (7) umfasst, wobei der Arbeitsbereich (7) eine Stirnseite (9) und eine - in axialer Richtung gesehen - an die Stirnseite (9) anschließende Umfangsfläche (11) aufweist, wobei an der Umfangsfläche (11) mindestens vier geometrisch definierte Schneidkanten (13, 15, 17, 19, 21) angeordnet sind, wobei jeweils zwei - in Umfangsrichtung gesehen - unmittelbar benachbarte Schneidkanten (13, 15, 17, 19, 21) durch einen Teilungswinkel (α, β, γ, δ, ε) voneinander beabstandet sind, wobei der Arbeitsbereich (7) - entlang der Mittelachse gesehen - einen ersten Teilungsbereich (23) aufweist, in dem alle Teilungswinkel (α, β, γ, δ, ε) voneinander verschieden sind, **dadurch gekennzeichnet, dass** alle Schneidkanten (13, 15, 17, 19, 21) entlang ihres Verlaufs jeweils genau eine Unterbrechung (43) aufweisen, wobei alle Unterbrechungen (43) - in axialer Richtung gesehen - zueinander versetzt angeordnet sind.

2. Fräswerkzeug (1) nach Anspruch 1, **dadurch gekennzeichnet, dass** der erste Teilungsbereich (23) im Bereich einer größten Auskragung des Arbeitsbereichs (7), bevorzugt an einem der Stirnseite (9) zugewandten Ende der Schneidkanten (13, 15, 17, 19, 21) angeordnet ist.

3. Fräswerkzeug (1) nach einem der vorhergehenden Ansprüche, **dadurch gekennzeichnet, dass** der Arbeitsbereich (7) einen zweiten Teilungsbereich (25) aufweist, in dem alle Teilungswinkel (µ) gleich sind, wobei der zweite Teilungsbereich (25) - in axialer Richtung gesehen - von dem ersten Teilungsbereich (23) beabstandet ist, und wobei der zweite Teilungsbereich (25) vorzugsweise an einem dem Spannbereich (5) zugewandten Ende der Schneidkanten (13, 15, 17, 19, 21) angeordnet ist.

4. Fräswerkzeug (1) nach einem der vorhergehenden Ansprüche, **dadurch gekennzeichnet, dass** jede Schneidkante (13, 15, 17, 19, 21) einen ihr zugeordneten Drallwinkel (ζ, ι, κ, λ) aufweist, der mindestens 30° bis höchstens 60°, vorzugsweise mindestens 38° bis höchstens 45° beträgt.

5. Fräswerkzeug (1) nach Anspruch 4, **dadurch gekennzeichnet, dass** alle Drallwinkel (ζ, ι, κ, λ) voneinander verschieden sind.

6. Fräswerkzeug nach einem der Ansprüche 4 und 5, **dadurch gekennzeichnet, dass** die den Schneidkanten (13, 15, 17, 19, 21) zugeordneten Drallwinkel (ζ, ι, κ, λ) so auf die verschiedenen Teilungswinkel (α, β, γ, δ, ε) einerseits und auf einen - in axialer Richtung gemessenen - Abstand zwischen dem ersten Teilungsbereich (23) und dem zweiten Teilungsbereich (25) andererseits abgestimmt sind, dass sich - entlang der Schneidkanten (13, 15, 17, 19, 21) gesehen - ein kontinuierlicher Übergang von dem ersten Teilungsbereich (23) zu dem zweiten Teilungsbereich (25) ergibt.

7. Fräswerkzeug (1) nach einem der vorhergehenden Ansprüche, **dadurch gekennzeichnet, dass** der Arbeitsbereich (7) fünf Schneidkanten (13, 15, 17, 19, 21) aufweist.

8. Fräswerkzeug (1) nach Anspruch 7, **dadurch gekennzeichnet, dass** von den fünf Teilungswinkeln (α, β, γ, δ, ε) zwischen den fünf Schneidkanten (13, 15, 17, 19, 21) in dem ersten Teilungsbereich (23) ein erster Teilungswinkel (a) genau 67° beträgt, wobei ein zweiter Teilungswinkel (β) genau 73° beträgt, wobei ein dritter Teilungswinkel (γ) genau 71° beträgt, wobei ein vierter Teilungswinkel (δ) genau 70° beträgt, und wobei ein fünfter Teilungswinkel (ε) genau 79° beträgt, wobei vorzugsweise der erste Teilungswinkel (α), der zweite Teilungswinkel (β), der dritte Teilungswinkel (γ), der vierte Teilungswinkel (δ) und der fünfte Teilungswinkel (ε) - in Umfangsrichtung und vorzugsweise entgegen einer Drehrichtung des Fräswerkzeugs (1) gesehen - in der aufgezählten Reihenfolge aufeinanderfolgen.

9. Fräswerkzeug (1) nach einem der vorhergehenden Ansprüche, **dadurch gekennzeichnet, dass** mindestens eine Schneidkante (13, 15, 17, 19, 21) eine - in Umfangsrichtung gesehen - unmittelbar an die Schneidkante (13, 15, 17, 19, 21) anschließende Freifläche (31) aufweist.

10. Fräswerkzeug (1) nach Anspruch 9, **dadurch gekennzeichnet, dass** ein der Freifläche (31) zugeordneter Freiwinkel (v) kleiner ist als 4°.

11. Fräswerkzeug (1) nach einem der Ansprüche 9 und 10, **dadurch gekennzeichnet, dass** die Freifläche (31) eine konvexe Form aufweist.

12. Fräswerkzeug (1) nach einem der Ansprüche 9 bis 11, **dadurch gekennzeichnet, dass** die Freifläche (31) eine Breite (B) aufweist, die mindestens 0,5 % bis höchstens 6 %, vorzugsweise mindestens 1 % bis höchstens 4 % des größten Durchmessers des Fräswerkzeugs (1) beträgt.

13. Fräswerkzeug (1) nach einem der vorhergehenden Ansprüche, **dadurch gekennzeichnet, dass**
- die Unterbrechungen (43) jeweils als Ausnehmung, insbesondere als sich in Umfangsrichtung erstreckende Nut ausgebildet sind, die sich vorzugsweise ausgehend von der Schneidkante (13, 15, 17, 19, 21) in eine an diese anschließende Freifläche (31) hinein erstrecken.

## Claims

1. Milling tool (1) having a base body (3) that comprises a centre axis (M) and said base body (3) comprises a clamping area (5) and an operational area (7), wherein the operational area (7) comprises an end face (9) and a circumferential surface (11) that connects - when viewed in the axial direction - to the end face (9), wherein at least four geometrically defined cutting edges (13, 15, 17, 19, 21) are arranged on the circumferential surface (11), wherein in each case two - when viewed in the circumferential direction - directly adjacent cutting edges (13, 15, 17, 19, 21) are spaced from one another by means of a dividing angle (α, β, γ, δ, ε), wherein the operational area (7) - when viewed along the centre axis - comprises a first dividing area (23) in which all the dividing angles (α, β, γ, δ, ε) are different from one another, **characterised in that** all the cutting edges (13, 15, 17, 19, 21) comprise in each case precisely one interruption (43) along their extent, wherein all the interruptions (43) - when viewed in the axial direction - are arranged offset with respect to one another.

2. Milling tool (1) according to claim 1, **characterised in that** the first dividing area (23) is arranged in the region of a largest projection of the operating area (7), preferably on an end of the cutting edges (13, 15, 17, 19, 21) that is facing the end face (9).

3. Milling tool (1) according to one of the preceding claims, **characterised in that** the operating area (7) comprises a second dividing area (25) in which all the dividing angles (µ) are identical, wherein the second dividing area (25) - when viewed in the axial direction - is spaced from the first dividing area (23), and wherein the second dividing area (25) is preferably arranged on an end of the cutting edges (13, 15, 17, 19, 21) that is facing the clamping area (5).

4. Milling tool (1) according to one of the preceding claims, **characterised in that** each cutting edge (13, 15, 17, 19, 21) comprises an angle of twist (ζ, ι, κ, λ) that is allocated to said cutting edge and is at least 30° to at most 60°, preferably at least 38° to at most 45°.

5. Milling tool (1) according to claim 4, **characterised in that** all the angles of twist (ζ, ι, κ, λ) are different from one another.

6. Milling tool according to one of claims 4 and 5, **characterised in that** the angles of twist (ζ, ι, κ, λ) that are allocated to the cutting edges (13, 15, 17, 19, 21) are coordinated on the one hand to the different dividing angles (α, β, γ, δ, ε) and on the other hand - when measured in the axial direction - to a distance between the first dividing area (23) and the second dividing area (25) in such a manner that - when viewed along the cutting edges (13, 15, 17, 19, 21) - a continuous transition is provided from the first dividing area (23) to the second dividing area (25).

7. Milling tool (1) according to one of the preceding claims, **characterised in that** the operating area (7) comprises five cutting edges (13, 15, 17, 19, 21).

8. Milling tool (1) according to claim 7, **characterised in that** of the five dividing angles (α, β, γ, δ, ε) between the five cutting edges (13, 15, 17, 19, 21) in the first dividing area (23) a first dividing angle (α) is precisely 67°, wherein a second dividing angle (β) is precisely 73°, wherein a third dividing angle (γ) is precisely 71°, wherein a fourth dividing angle (δ) is precisely 70°, and wherein a fifth dividing angle (ε) is precisely 79°, wherein it is preferred that the first dividing angle (α), the second dividing angle (β), the third dividing angle (γ), the fourth dividing angle (δ) and the fifth dividing angle (ε) - when viewed in the circumferential direction and preferably opposite a direction of rotation of the milling tool (1) - follow one another in the listed sequence.

9. Milling tool (1) according to one of the preceding claims, **characterised in that** at least one cutting edge (13, 15, 17, 19, 21) comprises - when viewed in the circumferential direction - a clearance surface (31) that is directly connected to this cutting edge (13, 15, 17, 19, 21).

10. Milling tool (1) according to claim 9, **characterised in that** a clearance angle (v) that is allocated to the clearance surface (31) is smaller than 4°.

11. Milling tool (1) according to one of claims 9 and 10, **characterised in that** the clearance surface (31) comprises a convex shape.

12. Milling tool (1) according to one of claims 9 to 11, **characterised in that** the clearance surface (31) comprises a width (B) that is at least 0.5 % to at most 6 %, preferably at least 1 % to at most 4 % of the largest diameter of the milling tool (1).

13. Milling tool (1) according to one of the preceding claims, **characterised in that**
- the interruptions (43) in each case are embodied as a recess, in particular as a groove that extends in the circumferential direction and said interruptions (43) preferably extend starting from the cutting edge (13, 15, 17, 19, 21) into a clearance surface (31) that connects to this cutting edge (13, 15, 17, 19, 21).

## Revendications

1. Outil de fraisage (1) comportant un corps de base (3) présentant un axe médian (M), qui comprend une zone de serrage (5) et une zone de travail (7), dans lequel la zone de travail (7) présente une face frontale (9) et - vu dans le sens axial - une face périphérique (11) faisant suite à la face frontale (9) dans lequel au moins quatre arêtes de coupe (13, 15, 17, 19, 21) définies géométriquement sont disposées sur la face périphérique (11), dans lequel respectivement deux - vu dans le sens périphérique - arêtes de coupe (13, 15, 17, 19, 21) directement voisines sont distantes l'une de l'autre par un angle de division (α, β, γ, δ, ε), dans lequel la zone de travail (7) - vu le long de l'axe médian - présente une première zone de division (23) dans laquelle tous les angles de division (α, β, γ, δ, ε) sont différents l'un de l'autre, **caractérisé en ce que** toutes les arêtes de coupe (13, 15, 17, 19, 21) présentent précisément le long de leur tracé respectif une interruption (43), dans lequel toutes les interruptions (43) - vu dans le sens axial - sont disposées décalées l'une par rapport à l'autre.

2. Outil de fraisage (1) selon la revendication 1, **caractérisé en ce que** la première zone de division (23) est disposée au niveau d'une plus grande saillie de la zone de travail (7), de préférence à une extrémité des arêtes de coupe (13, 15, 17, 19, 21) tournée vers la face frontale (9).

3. Outil de fraisage (1) selon l'une des revendications précédentes, **caractérisé en ce que** la zone de travail (7) présente une deuxième zone de division (25) dans laquelle tous les angles de division (µ) sont égaux, dans lequel la deuxième zone de division (25) - vu dans le sens axial - est distante de la première zone de division (23) et dans lequel la deuxième zone de division (25) est disposée de préférence à une extrémité des arêtes de coupe (13, 15, 17, 19, 21) tournée vers la zone de serrage (5).

4. Outil de fraisage (1) selon l'une des revendications précédentes, **caractérisé en ce que** chaque arête de coupe (13, 15, 17, 19, 21) présente un angle de torsion (ζ, ι, k, λ) associé à celle-ci qui fait au moins 30° à au plus 60°, de préférence au moins 38° à au plus 45°.

5. Outil de fraisage (1) selon la revendication 4, **caractérisé en ce que** tous les angles de torsion (ζ, ι, k, λ) sont différents l'un de l'autre.

6. Outil de fraisage selon l'une des revendications 4 et 5, **caractérisé en ce que** les angles de torsion (ζ, ι, k, λ) associés aux arêtes de coupe (13, 15, 17, 19, 21) sont ajustés de telle façon par rapport aux différents angles de division (α, β, γ, δ, ε) d'une part et à un espacement - mesuré dans le sens axial - entre la première zone de division (23) et la deuxième zone de division (25) d'autre part que - vu le long des arêtes de coupe (13, 15, 17, 19, 21) - il y a une transition continue de la première zone de division (23) à la deuxième zone de division (25).

7. Outil de fraisage (1) selon l'une des revendications précédentes, **caractérisé en ce que** la zone de travail (7) présente cinq arêtes de coupe (13, 15, 17, 19, 21).

8. Outil de fraisage (1) selon la revendication 7, **caractérisé en ce que** des cinq angles de division (α, β, γ, δ, ε) entre les cinq arêtes de coupe (13, 15, 17, 19, 21) dans la première zone de division (23), un premier angle de division (a) fait précisément 67°, dans lequel un deuxième angle de division (β) fait précisément 73°, dans lequel un troisième angle de division (y) fait précisément 71°, dans lequel un quatrième angle de division (δ) fait précisément 70° et dans lequel un cinquième angle de division (ε) fait précisément 79°, dans lequel de préférence le premier angle de division (α), le deuxième angle de division (β), le troisième angle de division (γ), le quatrième angle de division (δ) et le cinquième angle de division (ε) - vu dans le sens périphérique et de préférence contre un sens de rotation de l'outil de fraisage (1) - se suivent dans l'ordre indiqué.

9. Outil de fraisage (1) selon l'une des revendications précédentes, **caractérisé en ce qu'**au moins une arête de coupe (13, 15, 17, 19, 21) présente- vu dans le sens périphérique - une face de dépouille (31) faisant suite directement à l'arête de coupe (13, 15, 17, 19, 21).

10. Outil de fraisage (1) selon la revendication 9, **caractérisé en ce qu'**un angle de dépouille (v) correspondant à la face de dépouille (31) est inférieur à 4°.

11. Outil de fraisage (1) selon l'une des revendications 9 et 10, **caractérisé en ce que** la face de dépouille (31) présente une forme convexe.

12. Outil de fraisage (1) selon l'une des revendications 9 à 11, **caractérisé en ce que** la face de dépouille (31) présente une largeur (B) qui fait au moins 0,5 % à au plus 6 %, de préférence au moins 1 % à au plus 4 % du plus grand diamètre de l'outil de fraisage (1).

13. Outil de fraisage (1) selon l'une des revendications précédentes, **caractérisé en ce que**
- les interruptions (43) sont respectivement formées en tant qu'évidements, en particulier en tant que rainures s'étendant dans le sens périphérique, qui s'étendent de préférence, en partant de l'arête de coupe (13, 15, 17, 19, 21), jusque dans une face de dépouille (31) faisant suite à celle-ci.
